# EUROPÄISCHE PATENTANMELDUNG

(11) **EP 1 738 859 A1**
(43) Veröffentlichungstag der Anmeldung: **03.01.2007**
(21) Anmeldenummer: 06013185.1
(22) Anmeldetag: 27.06.2006
(51) Int. Cl.: B23K 26/34, B23K 26/10, B23K 26/04, B23K 26/067, B23K 101/00, B23K 101/04

(54) **Vorrichtung zur Laser-Belichtung von Zylinderlaufbahnen von Kolbenmaschinen mit mehreren voneinander beabstandete, höhenverstellbare und um eine rotationachse drebare Optik-Einrichtungen ; Verfahren zur Belichtung von Zylinderlaufbahnen von Kolbenmaschinen unter Verwendung einer solchen Vorrichtung**

(30) Priorität: 30.06.2005 DE 102005030976
(71) Anmelder: AUDI AG, 85045 Ingolstadt (DE); Arges GmbH, 92507 Nabburg (DE)
(72) Erfinder: Lindner, Horst, 85051 Ingolstadt (DE); Guggenmos, Markus, 92507 Nabburg (DE)
(74) Vertreter: Geissler, Manfred

(57) **Zusammenfassung**

Die Erfindung betrifft eine Vorrichtung (1) zur Belichtung von Zylinderlaufbahnen (2) von Kolbenmaschinen mit einer in einen Zylinder (3-6) einführbaren Optik-Einrichtung (10-13), die zur Belichtung der Zylinderlaufbahn (2) mittels eines Laserstrahles (17) einer Lasereinrichtung höhenverstellbar sowie vorzugsweise um eine Rotationsachse drehbar ausgebildet ist, wobei die Belichtungsvorrichtung (1) mehrere voneinander beabstandete, höhenverstellbare und vorzugsweise um eine Rotationsachse drehbare Optik-Einrichtungen (10,11,12,13) aufweist.

## Beschreibung

Die Erfindung betrifft eine Vorrichtung zur Belichtung von Zylinderlaufbahnen von Kolbenmaschinen nach dem Oberbegriff des Anspruchs 1.

Es ist allgemein bekannt, die Zylinderlaufbahnen von Kurbelgehäusen aus Lamellengraphitguss durch das sogenannte Honen oder Ziehschleifen nachzubearbeiten, da dadurch der Zylinder eine Struktur aus nur wenigen µm tiefen, sich kreuzenden Riefen erhält, in denen sich das Schmieröl halten kann. Diese Kreuzriefenstruktur weist die Eigenschaften eines kommunizierenden Kanalsystems auf, d. h., dass das Öl hierüber entweichen kann, wodurch die hydrodynamische Wirkung des Schmieröls reduziert wird, so dass es zu erhöhten Mischreibungsvorgängen an der Zylinderlaufbahn und damit zu erhöhtem Verschleiß kommen kann. Ein weiterer Nachteil dieser kommunizierenden Wirkung der Honriefen ist der relativ hohe Ölverbrauch.

Um diesen Nachteilen zu begegnen, wird beispielsweise in der DE 39 22 377 C2 vorgeschlagen, die zuvor gehonten Zylinderlaufbahnen einer UV-Laserbelichtung auszusetzen, die von einem Laser, beispielsweise einem Excimerlaser bereitgestellt wird. Konkret werden hier die gehonten Zylinderlaufbahnen mit dem UV-Laserlicht beaufschlagt, so dass die Oberfläche circa µm tief angeschmolzen wird, was ihre Topografie verändert. Dadurch bilden sich mikroskopisch kleine Kuhlen, die das ÖI besser sammeln und untereinander kein kommunizierendes System im Sinne der Honriefen ausbilden. Beim Erstarren bildet sich eine nanokristalline Struktur, die die Verschleiß- und Korrosionsbeständigkeit verbessert. Zudem gelangt beim Schmelzen Stickstoff in die Schicht, was ihr keramische Eigenschaften verleiht. Neben dem Verschleiß kann dadurch auch der Ölverbrauch abgesenkt werden, was letztlich auch der Abgasqualität zugute kommt.

Um die Belichtung von Zylinderlaufbahnen von Zylindern durchzuführen, ist es allgemein bekannt, zur Belichtung das zu belichtende Werkstück rotieren zu lassen. Nachteilig bei diesem Aufbau ist jedoch, dass das zu rotierende Werkstück jeweils in eine zentrische Lage zum z. B. Spiegelsystem der Belichtungsvorrichtung gebracht werden muss. Die bei der Werkstückrotation auftretenden Fliehkräfte müssen zudem durch Kontermassen kompensiert werden.

Aufgrund dieser Nachteile eines ortsfest angeordneten Spiegelsystems einer Belichtungsvorrichtung werden zur Belichtung von Zylinderlaufbahnen von Kolbenmaschinen regelmäßig Belichtungsvorrichtungen eingesetzt, bei denen das optische System zur Belichtung der Zylinderlaufbahnen rotiert und dementsprechend das die zu belichtende Zylinderlaufbahn aufweisende Werkstück ortsfest angeordnet ist. Beispielsweise ist ein derartiger Aufbau aus der gattungsbildenden DE 295 06 005 U1 bekannt, die eine Belichtungsvorrichtung mit einer in einen Zylinder einführbaren Optik-Einrichtung zeigt, die zur Belichtung der Zylinderlaufbahn mittels eines Laserstrahls einer Lasereinrichtung um eine Rotationsachse rotierbar und entlang dieser Rotationsachse höhenverstellbar ausgebildet ist. Konkret ist hier eine Lasereinrichtung an einer heb-und senkbaren Maschinenspindel angebracht, die ein Optik-System als Optik-Einrichtung enthält, mittels der der Laserstrahl aus seiner zur Achse der Maschinenspindel parallelen Richtung in eine radiale Richtung umgelenkt wird. Das Optik-System ist innerhalb der hohlen Maschinenspindel angeordnet, die eine radiale Öffnung für den Durchtritt des ungelenkten Laserstrahles aufweist, wobei das Optik-System zur Fokussierung des Laserstrahles ein Optikteil enthält, das mittels eines Optiktubus verstellbar ist, der in der Maschinenspindel gelagert und mit einer außerhalb der Maschinenspindel befindlichen Verstellvorrichtung verstellbar ist. Der Optiktubus wird mit einem Ende in einen Zylinder eingebracht, wobei ein axial durch den Optiktubus hindurch eingespeister Laserstrahl in einer Sammellinse des Optik-Systems gebündelt und mittels eines Spiegels als weiterem Bestandteil des Optik-Systems so umgelenkt wird, dass der Laserstrahl durch die radiale Öffnung hindurch auf die Zylinderlaufbahn des zu belichtenden Zylinders auftrifft. Ein vom Prinzip her ähnlicher Aufbau ist auch aus der DE 42 17 530 C2 und der DE 43 16 012 C2 bekannt. Ebenso ist ein solcher Aufbau vom Prinzip her auch aus der EP 0 876 870 B1 (Fig. 4) bekannt, wobei in dieser Druckschrift zudem auch noch ein Aufbau offenbart ist (Fig. 1), bei dem ein Spiegel als Bestandteil einer Optik-Einrichtung und ein einen Laserstrahl erzeugender Laser von gegenüberliegenden Seiten eines Zylinders her in diesen eingeführt werden.

Aus der CA 2 317 926 A1 ist eine gattungsgemäße Belichtungsvorrichtung bekannt, bei der vier Optikeinrichtungen in einer Reihe angeordnet sind, damit die vier Zylinder eines Zylinderkurbelgehäuses gleichzeitig bearbeitet werden können. Der gleichzeitige Einsatz der vier Optikeinrichtungen führt zu einer Reduzierung der Umrüst-, Einstell- bzw. Justierzeiten, da die jeweiligen Optikeinrichtungen nicht für jeden der vier Zylinder einzeln neu ausgerichtet und justiert werden müssen. Bei einer solchen gleichzeitigen Belichtung der Zylinderlaufbahnen der Zylinder ist es jedoch erforderlich, jede der Optik-Einrichtungen baulich aufwendig mit einer eigenen Laserlichtquelle auszurüsten. Dies gilt auch für die Belichtungsvorrichtung aus der WO 05/0 53 896 A1 und der DE 199 59 608 A1, wonach ebenfalls mehrere, in Reihe angeordnete OptikEinrichtungen eine Mehrzahl von Zylinderbohrungen eines Verbrennungsmotors gleichzeitig bearbeiten können.

Aufgabe der Erfindung ist es daher, eine Vorrichtung zur Belichtung von Zylinderlaufbahnen, insbesondere von aus Lamellengraphitguss hergestellten Zylinderlaufbahnen von Kolbenmaschinen zu schaffen, mittels der eine Belichtung von Zylinderlaufbahnen eines mehrzylindrigen Zylinderblocks auf einfache Weise sehr schnell und effektiv ohne lange Rüst- und Justierzeiten mit verbesserter Laserausnutzung durchgeführt werden kann.

Diese Aufgabe wird gelöst mit den Merkmalen des Anspruchs 1.

Gemäß Anspruch 1 weist die Belichtungsvorrichtung mehrere voneinander beabstandete höhenverstellbare und vorzugsweise auch jeweils um eine Rotationsachse rotierbare Optik-Einrichtungen auf, wobei für eine Laufbahnbelichtung eines mehrzylindrigen Zylinderblocks jeweils mehreren vorgegebenen Zylindern, vorzugsweise jedem der Zylinder, jeweils eine der mehreren Optik-Einrichtungen zugeordnet ist. Dies kann ggf. auch stufenweise erfolgen, d. h. in einer ersten Stufe sind die Optik-Einrichtungen einem ersten Teil der Zylinder zugeordnet und in einer zweiten Stufe sind die Optik-Einrichtungen dem Rest der Zylinder zugeordnet.

Durch dieses Vorsehen von mehreren Optik-Einrichtungen zur Laufbahnbelichtung erfolgt durch das einmalige Ausrichten des Zylinderblocks eine einfache und schnelle Zuordnung der Optik-Einrichtungen zu den mehreren Zylindern des Zylinderblocks, so dass die Belichtung der Zylinderlaufbahnen des Zylinderblockes bei einer Betätigung der Belichtungsvorrichtung schnell und einfach ohne aufwendige Umrüst- und Justierzeiten vorgenommen werden kann.

Die vorliegende Erfindung soll hier ausdrücklich auch solche optischen Einrichtungen umfassen, bei denen die Optik-Einrichtung nicht rotiert, sondern ein radial umlaufender Lichtaustritt mit ausreichender Energiedichte, durch z. B. Einsatz entsprechender Lichtleiter-Elemente erfolgt, und die somit lediglich höhenverstellbar ausgebildet ist. Unter einem Zylinderblock werden darüber hinaus z. B. Anordnungen verstanden, wie z. B. ein Zylinderkurbelgehäuse eines Reihen- oder V-Motors oder aber auch sonstige rotationssymmetrische Hohlkörper, wie beispielsweise Zylinderrohre von Nutzfahrzeugmotoren, die z. B. mittels Justiereinrichtungen mit einem solchen Abstand voneinander auf einer Palette angeordnet sind, dass jedes der Zylinderrohre einer bestimmten Optik-Einrichtung zugeordnet ist. In diesem Zusammenhang ist es auch denkbar, die Zylinderrohre von seitlichen Schienen geführt in bestimmter Anzahl als Paket in die Belichtungsvorrichtung zu schieben, wobei die Justierung durch eine Einrichtung in der Anlage selbst erfolgen kann.

Erfindungsgemäß sind die Optik-Einrichtungen jeweils durch einen vorzugsweise drehbar gelagerten und für die Vorschubbewegung vorzugsweise teleskopierbaren Optiktubus gebildet, der am in den Zylinder einzuführenden freien Tubusendbereich ein optisches Element, wie z. B. einen Umlenkspiegel oder ein Prisma, aufweist, durch den ein innerhalb des Optiktubus geführter Laserstrahl auf die Zylinderlaufbahn gerichtet werden kann.

Diese Optiktuben münden mit ihrem jeweiligen dem freien Tubusendbereich gegenüberliegenden Tubusendbereich in einen Hohlträger, der in einer Doppelfunktion zusätzlich einen Strahlkanal für einen Laserstrahl einer Lasereinrichtung ausbildet. Im innerhalb dieses Strahlkanals liegenden Schnittpunkt der optischen Achsen der Optiktuben mit dem Strahlengang eines Laserstrahls ist jeweils ein optisches Umlenkelement angeordnet, z. B. ein Klappspiegel, der in einer Grund- bzw. Umlenkstellung den Laserstrahl in Richtung des zugeordneten Optiktubus ablenkt und der in einer Nicht-Gebrauchsstellung außerhalb des Strahlengangs des Laserstrahls angeordnet ist. Konkret bedeutet dies, dass z. B. in Verbindung mit einer Belichtungsvorrichtung für ein Zylinderkurbelgehäuse eines Vier-Zylinder-Reihenmotors vier am Hohlträger gelagerte Optiktuben vorgesehen sind, denen innerhalb des Strahlkanals jeweils ein Umlenkelement, z. B. ein Klappspiegel zugeordnet ist, d. h., dass dann insgesamt vier solcher Umlenkelemente im Strahlkanal angeordnet sind. Die Umlenkelemente werden z. B. mittels eines Betätigungselementes zwischen der Umlenkstellung und der Grundstellung bewegt, wobei die Betätigungseinrichtung, z. B. ein Stellmotor oder dergleichen, z. B. von einer Steuereinrichtung in Abhängigkeit von vorgegebenen Belichtungsparametern angesteuert wird.

Ein weiterer wesentlicher Vorteil der erfindungsgemäßen Vorrichtung ist, dass diese auf einfache Weise in Transferstraßen integriert werden kann, in der der zu belichtende Zylinderblock der Belichtungsvorrichtung von einer davor liegenden Station, vorzugsweise getaktet, zugeführt wird und in der der Zylinderblock nach der Belichtung sämtlicher Zylinderlaufwände der nächsten Station zugeführt wird.

Ein besonders einfacher Aufbau einer Belichtungsvorrichtung ergibt sich für solche Zylinderblöcke, bei denen die Zylinder in einer Reihe angeordnet sind und die Zylinder mit einem vorgegebenen Zylinder-Stichmaß voneinander beabstandet sind, da dann die Optik-Einrichtungen ebenfalls in einfacher Weise in einer Reihe angeordnet werden können. Der konkrete Abstand zwischen den einzelnen Optik-Einrichtungen sowie deren Anzahl kann davon abhängig gemacht werden, wie groß das jeweilige Zylinder-Stichmaß ist.

So kann z. B. gemäß einer besonders bevorzugten Ausführungsform, bei der die Zylinder einen jeweils solchen großen Durchmesser aufweisen, dass die Optiktuben problemlos nebeneinander in einer Reihe angeordnet werden können, vorgesehen sein, dass die Anzahl der jeweils vorzusehenden Optik-Einrichtungen der Anzahl der Zylinder entspricht. Gleichzeitig entspricht hier der Abstand zwischen den Optiktuben dann vorzugsweise dem durch das Zylinder-Stichmaß vorgegebenen Abstand. Zur Belichtung der Zylinderlaufbahnen eines mehrzylindrigen Zylinderblocks wird dann bei einem derartigen Aufbau ein im Strahlengang eines Laserstrahls positioniertes, erstes Umlenkelement so vom Laserstrahl getroffen, dass der Laserstrahl für eine vorgegebene Belichtungs-Zeitdauer zu einem dem ersten Umlenkelement zugeordneten ersten Optiktubus umgelenkt wird. Dieser kann dann durch entsprechende Rotation und Höhenverstellung die gewünschte Belichtung der Zylinderlaufbahn eines ersten Zylinders eines mehrzylindrigen Zylinderblockes durchführen. Nach Ablauf der vorgegebenen Belichtungs-Zeitdauer, die in der Größenordnung von circa 20 Sekunden pro Zylinder liegt, wird dann das erste Umlenkelement außerhalb des Strahlengangs des Laserstrahls angeordnet, z. B. ein Klappspiegel aus dem Strahlengang weggeklappt, so dass ein im Strahlengang dahinterliegendes zweites Umlenkelement, das sich in seiner Grund- bzw. Umlenkposition befindet, den Laserstrahl für eine wiederum vorgegebene Belichtungs-Zeitdauer zu einem dem zweiten Umlenkelement zugeordneten zweiten Optiktubus umlenkt und dann in einem zweiten Zylinder die Belichtung der Zylinderlaufbahn durchgeführt wird. Vom Ende der Belichtung einer Zylinderbohrung bis zum Beginn der Belichtung der nächstfolgenden Zylinderbohrung durch Wegklappen des Umlenkelementes vergeht eine Zeit von 100 Millisekunden bis mehrere Sekunden, insbesondere 10 Sekunden. Bevorzugt beträgt die Zeit jedoch zwischen 150 bis 250 Millisekunden. Dieser Vorgang wird für jeden weiteren ggf. vorhandenen Optiktubus und entsprechend zugeordneten Umlenkelement bzw. Zylinder wiederholt, bis sämtliche Zylinderlaufbahnen der Zylinder belichtet sind. Mit einer derartigen Verfahrensführung wird ein Belichtungsvorgang in Verbindung mit einem mehrzylindrigen Zylinderblock auf einfache Weise ohne aufwendige Umrüst- und Justierzeiten mit optimaler Laserausnutzung möglich. So kann die Betätigung der einzelnen Umlenkelemente auf einfache Weise sehr schnell vorgenommen werden, so dass dadurch sichergestellt wird, dass in rascher Abfolge genau diejenige Belichtung durchgeführt wird, die vorgegeben ist. Grundsätzlich könnte in Verbindung mit einem derartigen Aufbau auch vorgesehen sein, mehrere Laserstrahlen vorzusehen, um die einzelnen Zylinder gleichzeitig und parallel zu belichten. Dies erfordert jedoch einen höheren Bauteilaufwand, da mehrere Lasereinrichtungen erforderlich sind, und zugleich einen höheren Energieverbrauch als dies bei der zuvor beschriebenen Verfahrensführung mit einem einzigen Laser der Fall ist.

Für den Fall, dass der Durchmesser der Zylinder eines mehrzylindrigen Zylinderblocks so klein ist, dass für zwei benachbarte Zylinder keine benachbarten Optiktuben vorgesehen werden können, kann gemäß einer alternativen Ausführungsform vorgesehen sein, dass in Verbindung mit insbesondere geradezahligen Zylinderzahlen nicht jedem, sondern z. B. nur jedem zweiten der Zylinder eine Optik-Einrichtung zugeordnet ist, beispielsweise bei einem Zylinderkurbelgehäuse eines Reihen-4-Zylinders lediglich zwei Optik-Einrichtungen vorgesehen sind, die dann im zuvor beschriebenen Sinne eine zweistufige Belichtung erforderlich machen würden. So würden die Optik-Einrichtungen in einem derartigen Fall dann so angeordnet, dass diese in einer ersten Belichtungsstufe z. B. den Zylindern 1 und 3 zugeordnet sind und in einer darauffolgenden zweiten Belichtungsstufe dann den Zylindern 2 und 4 zugeordnet wären. Trotz des damit verbundenen Mehraufwands durch die Notwendigkeit der Umpositionierung der Belichtungsvorrichtung zur Zuordnung zu den anderen Zylindern ist mit einem derartigen Aufbau immer noch eine Zeitersparnis gegenüber den herkömmlichen Belichtungsvorrichtungen gegeben, bei denen die Zylinder einzeln belichtet werden. Die zuvor angegebenen Belichtungszeiten gelten auch hier.

Zur Überwachung der Laserpulsenergie eines gepulsten Lasers, vorzugsweise eines Kurzpuls-Lasers, ist im Hohlträger, in Laserstrahlrichtung gesehen hinter einem letzten Umlenkelement eine Energie-Messzelle im Strahlengang des gepulsten Laserstrahls angeordnet. Besonders bevorzugt ist hier ein Kurzpuls-Laser, der unabhängig von der Wellenlänge mit einer Energiedichte von größer als 1 J/cm², insbesondere 1,75 J/cm² bis 5 J/cm² betrieben wird. Eine bevorzugte Wellenlänge für die Belichtung von Grauguss-Zylinderlaufbahnen beträgt z. B. 308 nm. Grundsätzlich sind jedoch auch andere Wellenlängen möglich, sofern die Laser den Anforderungen hinsichtlich Strahlleistung, Pulsdauer und Repetitionsrate entsprechen.

Bevorzugt ist die optische Auslegung, d. h. das Optik-System der Optiktuben so gestaltet, dass diese auch für eine Inspektion der belichteten Zylinderbohrung genutzt werden können. So ist gemäß einer diesbezüglich bevorzugten Ausgestaltung vorgesehen, dass jedem Optiktubus im Inneren des Hohlträgers ein dort angeordneter Bildsensor zugeordnet ist, der mit einer Rechner- und Auswerteeinrichtung einer Steuereinrichtung gekoppelt ist. Dieser Bildsensor liegt vorzugsweise in gerader Verlängerung der optischen Achse der Optiktuben.

In Verbindung mit Zylinderkurbelgehäusen von V-Motoren ist es zur Reduzierung der Gesamt-Belichtungszeit von Vorteil, für jede Zylinderbank eine separate Belichtungsvorrichtung mit einem Laser und komplettem optischen System mit mehreren Optik-Einrichtungen zu installieren. Damit fallen Umrüstzeiten zur Belichtung der beiden Zylinderbänke mittels ein und derselben Belichtungsvorrichtung weg.

Nachfolgend sind drei Ausführungsbeispiele der Erfindung anhand der beigefügten Figuren beschrieben.

### Es zeigen:

- Fig. 1: schematisch eine Prinzipskizze gemäß dem ersten Ausführungsbeispiel;
- Fig. 2: eine Ansicht entsprechend der Fig. 1 gemäß dem zweiten Ausführungsbeispiel; und
- Fig. 3: eine Ansicht entsprechend der Fig. 1 gemäß dem dritten Ausführungsbeispiel.

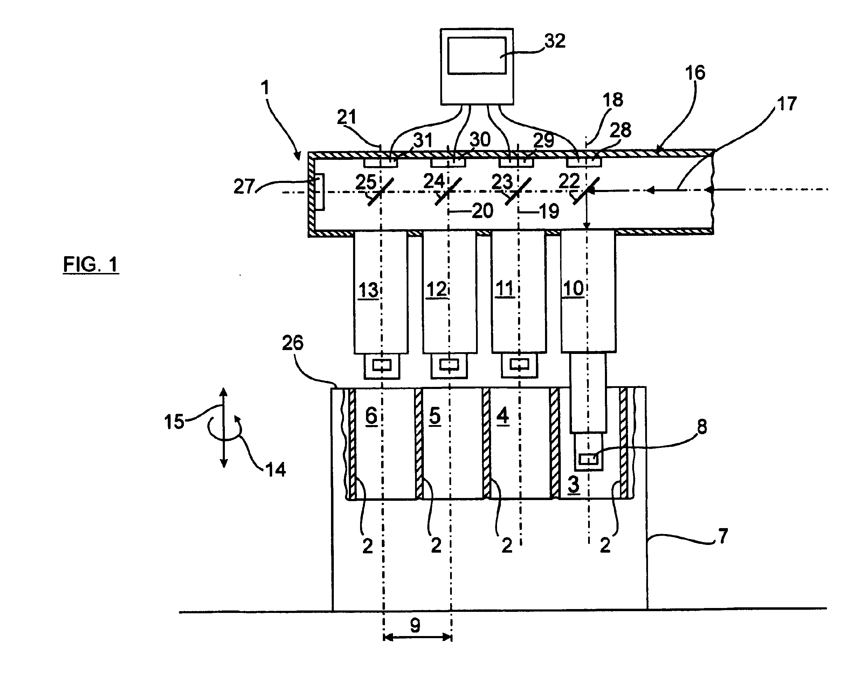

Die Figur 1 zeigt gemäß dem ersten Ausführungsbeispiel eine erfindungsgemäße Vorrichtung 1 zur Laserbelichtung von Zylinderlaufbahnen 2 von Kolbenmaschinen, hier beispielsweise zur Laserbelichtung von Zylinderlaufbahnen 2 eines vier Zylinder 3, 4, 5, 6 aufweisenden Zylinderkurbelgehäuses 7.

Die Belichtungsvorrichtung 1 mit rotierendem Umlenkspiegel oder -prisma 8 umfasst hier somit vier im Abstand des Stichmaßes 9 der Bohrungen der Zylinder 3 bis 6 angeordnete, drehbare und für die Höhenverstellung als Teleskop ausgebildete Optiktuben 10, 11, 12, 13.

Die durch die Pfeile 14 und 15 dargestellte Rotation bzw. Teleskopierung der Optiktuben 10 bis 13 erfolgt gesteuert, mittels wenigstens einer hier nicht dargestellten Betätigungsvorrichtung und ist an sich bekannter Bauart, so dass darauf nicht näher eingegangen wird.

Die vier Optiktuben 10 bis 13 sind an einem hier beispielsweise im Querschnitt rechteckig ausgebildeten Hohlträger 16 angebunden, der als quer zu den Zylinderachsen verlaufender Längsträger gleichzeitig auch einen Strahlkanal für einen gepulsten Laserstrahl 17 einer hier nicht gezeigten Lasereinrichtung, z. B. eines Excimer-Lasers ausbildet.

Im Hohlträger 16 sind über den vier Optiktuben 10 bis 13 jeweils im Schnittpunkt der optischen Achsen 18 bis 21 der Optiktuben 10 bis 13 und des Laserstrahls 17 Umlenkelemente, hier beispielhaft Klappspiegel 22 bis 25 angeordnet, mittels denen der Laserstrahl 17 um 90° Grad umgelenkt werden kann.

In dem, in der Fig. 1 dargestellten Ausgangszustand sind alle Klappspiegel 22 bis 25 im durch den Hohlträger 16 gebildeten Strahlkanal so ausgerichtet, dass mit diesen eine Strahlumlenkung um 90 Grad durchgeführt werden kann. Wird nun die Belichtungsvorrichtung 1 aktiviert und ein Laserstrahl 17 erzeugt, trifft dieser im Hohlträger 16 auf den in den ersten Zylinder 3 eingefahrenen ersten Optiktubus 10 zugeordneten ersten Klappspiegel 22, so dass die Zylinderlaufbahn 2 des ersten Zylinders 3 bei einer entsprechenden Drehung und Höhenverstellung des ersten teleskopierbaren Optiktubus 10 in der gewünschten Weise belichtet werden kann. Die Belichtungszeit beträgt z. B. circa 20 Sekunden. Die Belichtung selbst kann sowohl in der Abwärts- und Aufwärtsbewegung des rotierenden Optiktubus 10 erfolgen oder aber auch nur in dessen Abwärtsbewegung.

Am Ende des Belichtungsvorganges am ersten Zylinder 3 kann quasi ohne jegliche Zeitverzögerung innerhalb von z. B. 200 Millisekunden der nächste, zweite Optiktubus 11 mit der Belichtung der Zylinderlaufbahn 2 des zweiten Zylinders 4 starten. Hierzu wird der erste Klappspiegel 22 durch entsprechende Betätigung und Ansteuerung aus dem Strahlengang des Laserstrahls 17 im Hohlträger 16 geklappt, so dass der Laserstrahl 17 sogleich auf den zweiten Klappspiegel 23 trifft, der dem dann ebenfalls gesteuert mittels der Steuereinrichtung in den zweiten Zylinder 4 eingefahrenen zweiten Optiktubus 11 (hier nicht dargestellt) zugeordnet ist. Während der zweite Zylinder 4 belichtet wird, kann der erste Optiktubus 10 wieder in seine Ausgangsstellung verfahren werden. Alternativ dazu können am Ende der Belichtung sämtlicher Zylinderlaufbahnen der Zylinder 3 bis 6 jedoch auch sämtliche Optiktuben 10 bis 13 synchron aus den Zylinderbohrungen ausgefahren werden.

Die beschriebene Verfahrensweise zum Belichten wiederholt sich solange, bis alle Zylinder belichtet sind. Danach wird die gesamte Belichtungsvorrichtung 1 aus Hohlträger bzw. Strahlkanal 16 und Optiktuben 10 bis 13 von einer Kopfplatte 26 des Zylinderkurbelgehäuses 7 abgehoben und kann das Zylinderkurbelgehäuse 7 weitergetaktet werden. Beim nächsten Bauteil wiederholen sich dann die eben beschriebenen Vorgänge.

Die soeben beschriebene Anlagentechnik zur Zylinderlaufbahn-Belichtung lässt sich somit besonders einfach und vorteilhaft in Transferstraßen zur Bearbeitung eines z. B. Zylinderkurbelgehäuses 7 integrieren.

Wie dies der Figur 1 weiter entnommen werden kann, ist an dem der Lasereinrichtung gegenüberliegenden Ende des Hohlträgers 16 eine Energie-Messzelle 27 hohlträgerwandseitig angeordnet, mit der die Laserpulsenergie überwacht werden kann.

Ferner ist in Verlängerung der optischen Achsen 18 bis 21 der Optiktuben 10 bis 13 wandseitig jeweils ein Bildsensor 28 bis 31 angeordnet, der mit einer Visualisierungseinrichtung 32 zur Qualitätskontrolle als Bestandteil einer hier nicht im Detail dargestellten Steuereinrichtung gekoppelt ist. Mittels dieser Bildsensoren 28 bis 31 können die Optiktuben 10 bis 13 gleichzeitig zur Qualitätskontrolle der belichteten Zylinderlaufbahnen 2 genutzt werden.

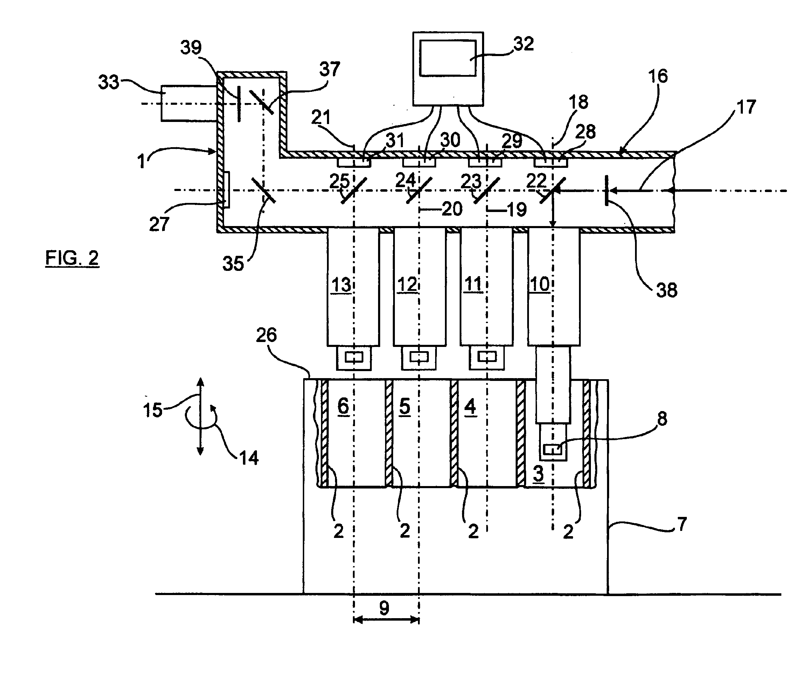

Die Belichtungsvorrichtung 1 gemäß dem folgenden zweiten Ausführungsbeispiel der Fig. 2 entspricht im grundsätzlichen Aufbau dem ersten Ausführungsbeispiel. Insoweit sind gleiche Bauteile mit jeweils identischen Bezugszeichen versehen und wird auf die Beschreibung des ersten Ausführungsbeispiels Bezug genommen.

Die Belichtungsvorrichtung 1 gemäß der Fig. 2 ist mit einer CCD-Kamera 33 erweitert, die zusammen mit der Messzelle 27 den Klappspiegeln 22 bis 24 in Strahlungsrichtung nachgeordnet sind. Die CCD-Kamera 33 und die Messzelle 27 dienen der Strahlprofilerfassung. Wie später ausführlich beschrieben ist, erfasst hierzu die Energie-Messzelle 27 die Laserpulsenergie und die CCD-Kamera 33 die Energieverteilung. Sowohl die Laserpulsenergie als auch die Energieverteilung stellen bei der UV-Laserbelichtung der Zylinderlaufbahn 2 bestimmende Größen hinsichtlich ihrer tribologischen Funktionstüchtigkeit (= Qualität) dar.

Bei der Strahlprofilerfassung sind zwei Erfassungsstrategien möglich, nämlich eine kontinuierliche (online) sowie auch eine in bestimmten Zyklen nach festzulegenden Pulszahlen des Lasers oder einer Anzahl belichteter Zylinderbohrungen. Letzteres ist möglich, da die Veränderungen der Laserpulsenergie und der Energieverteilung "alterungsbedingte" Vorgänge (Schädigung der optischen Elemente, Verunreinigung des Lasergases) sind und nicht schlagartig auftreten. Die Energie-Messzelle 27 bzw. die CCD-Kamera 33 zur Strahlprofilerfassung sind gemäß der Fig. 2 den Umlenkspiegeln 22 bis 25 nachgeordnet. Dies ist möglich, da der Reflektionswirkungsgrad der Reflektionsschichten der Umlenkspiegel 22 bis 25 nicht bei 100% liegt, d. h., ein kleiner Energieanteil geht in Richtung der optischen Achse des einfallenden Laserstrahles durch die Umlenkspiegel 22 bis 25 hindurch. Dieser Energieanteil steht in Relation zur Ausgangsenergie des Lasers, wie auch das Strahlprofil. Die Intensität des durchgehenden Energieanteils ist für eine Energiemessung bzw. Strahlprofilerfassung ausreichend.

Für die nicht von der Laserstrahlung beaufschlagten Umlenkspiegel 22 bis 25 erfordert diese Vorgehensweise, dass sie in ihre Nicht-Gebrauchsstellung (aus der optischen Achse des Strahlkanals) geklappt sind.

Zwischen dem in der Strahlungsrichtung letzten Umlenkspiegel 25 und der Energiemesszelle 27 ist gemäß der Fig. 2 zur Abkopplung des Laserstrahlungsanteils für die CCD-Kamera 33 ein Quarzsubstrat bzw. Quarzglas 35 installiert. Quarzglas hat die Eigenschaft, für UV-Strahlung durchlässig zu sein, auf der Oberfläche des Quarzsubstrates 35 wird jedoch ein gewisser Energieanteil (= 5%) reflektiert. Über einen Umlenkspiegel 37 wird der ausgekoppelte Laserstrahl in die CCD-Kamera 33 gelenkt.

Die oben geschilderte Verfahrensweise zur Energiemessung und Strahlprofilerfassung ist auch nutzbar für eine gezielte Überprüfung des Zustandes der messaktiven Optik sowie der Umlenkspiegel 22 bis 25 auf Schädigungen. Solche Schädigungen schlagen sich im Strahlprofil sowie in der Energiemessung nieder. Bei der Überprüfung der refraktiven Optik sind die Umlenkspiegel 22 bis 25 in Nicht-Gebrauchsstellung zu klappen.

Zur Visualisierung des Strahlprofiles kann der Bildschirm 32 genutzt werden, der über Signalleitungen mit der CCD-Kamera 33 und der Energiemesszelle 27 in Verbindung ist.

Da optische Systeme justiert werden müssen, sind gemäß der Fig. 2 vor dem ersten Umlenkspiegel 22 und vor der CCD-Kamera 33 Zieleinrichtungen 38, 39 installiert. Diese Zieleinrichtungen 38, 39 können aus Markierungen, wie einem Fadenkreuz oder einem Kreis bestehen. Das optische System ist justiert, wenn die Markierungen beider Zieleinrichtungen 38, 39 zur Deckung gelangen.

Zur einfacheren und schnelleren Wartung der Belichtungsvorrichtung 1 ist es von Vorteil, wenn die Wartung nicht an der Belichtungsanlage einer Transferstraße erfolgt, sondern separat. Hierdurch wird der Produktionsfortgang nur unwesentlich negativ beeinflusst. Hierzu ist die Belichtungsvorrichtung 1 mit einer Schnellkupplung zur refraktiven Optik ausgestattet.

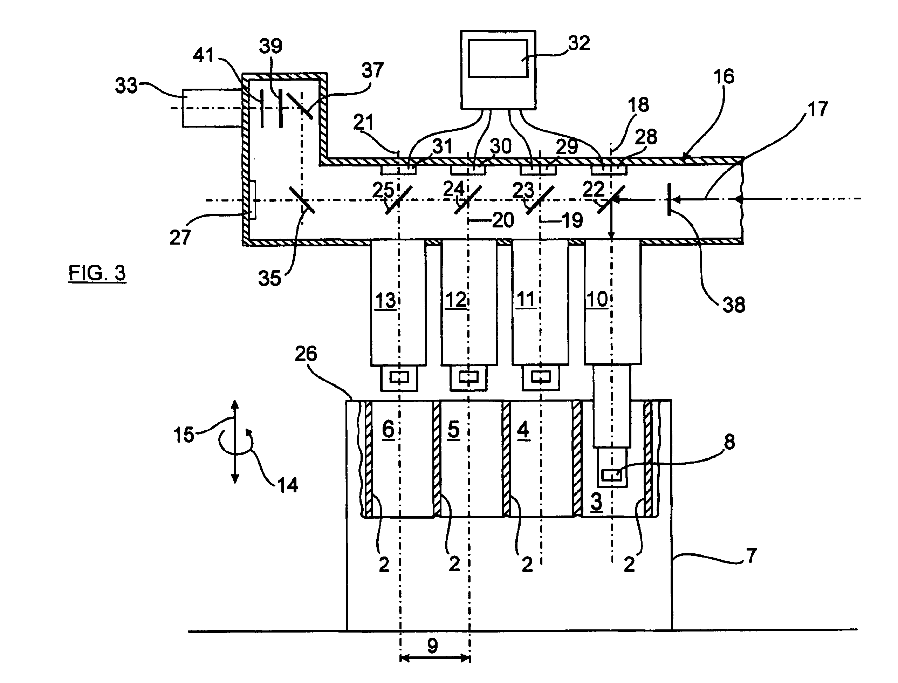

In der Fig. 3 ist die Belichtungsvorrichtung 1 gemäß dem dritten Ausführungsbeispiel gezeigt, das mit Ausnahme des zwischen der Zieleinrichtung 39 und der CCD-Kamera 33 im Strahlengang angeordneten Wandlerschirms/Abschwächers 41 identisch mit dem zweiten Ausführungsbeispiel ist.

Die in der Fig. 3, wie auch den Fig. 1 und 2 gezeigten Umlenkspiegel 22 bis 25 haben als Reflexionsschicht aus Gründen des Wirkungsgrades ein Schichtsystem (Coating), das auf die Wellenlänge des zu reflektierenden Laserstrahles abgestimmt ist. Jedoch ist ein gewisser Transmissionsanteil des Laserstrahles gegeben. Dieser Transmissionsanteil trifft auf das im Strahlengang im Winkel von 45° stehende planparallel geschliffene Quarzglas 35. Das Quarzglas weist eine hohe Transparenz auf, wobei jedoch ein gewisser Anteil des auftreffenden Laserstrahles an der Oberfläche reflektiert und hier um 90° umgelenkt wird.

Der Transmissionsanteil des Laserstrahles trifft auf die Energiemesszelle 27. Nach erfolgter Eineichung der Messzelle 27 ist mit ihr eine Online-Energie-Prozesskontrolle gegeben.

Der am Quarzglas 35 unter dem Winkel 90° reflektierte Anteil des Laserstrahles wird durch einen weiteren Umlenkspiegel 37 in die CCD-Kamera 33 gelenkt. Der CCD-Kamera 33 ist der Umwandlerschirm 41 vorgeschaltet. Der Umwandlerschirm 41 wandelt die Laserstrahlung passend in die Wellenlänge der CCD-Kamera 33 um. Dabei wird die Intensität der Laserstrahlung mit einem dem Umwandlerschirm 41 zugeordneten Abschwächer angepasst. Die CCD-Kamera 33 überprüft das Strahlprofil, ob es den Anforderungen zur Zylinderlaufbahnbelichtung entspricht (Überprüfung des Lasers).

Die Kombination der Energiemesszelle 27 mit der CCD-Kamera 33 stellt für die Zylinderlaufbahn-Belichtung ein vollständiges Online-Prozess-Überwachungssystem dar. Die gemessenen Daten geben Aufschluss über die Qualität der Belichtung.

Mit diesem Überwachungssystem kann auch der technische Zustand der Spiegel 22 bis 25 beurteilt werden. Hierzu werden die Spiegel einzeln in den Strahlengang geklappt.

Im Strahlengang sind zu dessen Anfang und zwischen dem letzten Umlenkspiegel 37 und dem Wandlerschirm/Abschwächer 41 die Zieleinrichtungen 38, 39 integriert. Die Zieleinrichtungen 38, 39 können beispielsweise aus zwei Fadenkreuzen bestehen.

Bei einem Wechsel der Belichtungseinrichtung, der dem Laser unmittelbar vorgeschalteten Optik, oder des Laser selbst kaum die optische Achse mit Hilfe der Zieleinrichtungen 38, 39 eingerichtet werden. Hierbei müssen bei Fadenkreuz-Zieleinrichtungen beide Fadenkreuze zur Deckung gelangen. Dies wird mit der CCD-Kamera 33 überprüft.

## Patentansprüche

1. Vorrichtung zur Belichtung von Zylinderlaufbahnen (2) von Kolbenmaschinen mit einer in einen Zylinder (3 bis 6) einführbaren Optik-Einrichtung, die zur Belichtung der Zylinderlaufbahn (2) mittels eines Laserstrahles (17) einer Lasereinrichtung höhenverstellbar sowie vorzugsweise um eine Rotationsachse drehbar ausgebildet ist, wobei
die Belichtungsvorrichtung (1) mehrere voneinander beabstandete, höhenverstellbare und vorzugsweise um eine Rotationsachse drehbare Optik-Einrichtungen (10, 11, 12, 13) aufweist,
für eine Laufbahnbelichtung eines mehrzylindrigen Zylinderblocks (7) jeweils mehreren vorgegebenen Zylindern (3, 4, 5, 6), vorzugsweise jedem der Zylinder (3, 4, 5, 6), jeweils eine der mehreren Optik-Einrichtungen (10, 11, 12, 13) zugeordnet ist,
die Optik-Einrichtungen jeweils durch einen für die Vorschubbewegung vorzugsweise teleskopierbaren sowie vorzugsweise drehbar gelagerten Optiktubus (10, 11, 12, 13) gebildet sind, der am in den Zylinder (3, 4, 5, 6) einzuführenden freien Tubusendbereich ein optisches Element (8), insbesondere einen Umlenkspiegel oder ein Prisma aufweist, durch den ein innerhalb des Optiktubus (10, 11, 12, 13) geführter Laserstrahl auf die Zylinderlaufbahnen (2) richtbar ist,
**dadurch gekennzeichnet, dass**
die Optiktuben (10, 11, 12, 13) mit ihrem jeweiligen dem freien Tubusendbereich gegenüberliegende Tubusendbereich in einen Hohlträger (16) münden, der einen Strahlkanal für einen Laserstrahl (17) einer Lasereinrichtung ausbildet, und
dass im innerhalb des Hohlträgers (16) liegenden Schnittpunkt der optischen Achsen (18, 19, 20, 21) der Optiktuben (10, 11, 12, 13) mit dem Strahlengang eines Laserstrahls (17) jeweils ein optisches Umlenkelement (22, 23, 24, 25), vorzugsweise ein Klappspiegel, angeordnet ist, das in einer Grund- bzw. Umlenkstellung den Laserstrahl (17) in Richtung zugeordnetem Optiktubus (10, 11, 12, 13) ablenkt und das in einer Nicht-Gebrauchsstellung außerhalb des Strahlengangs des Laserstrahls (17) angeordnet ist.

2. Vorrichtung nach Anspruch 1, **dadurch gekennzeichnet,**
**dass** die Zylinder (3, 4, 5, 6) in einer Reihe angeordnet sind und mit einem vorgegebenen Zylinder-Stichmaß (9) voneinander beabstandet sind, und
**dass** die Anzahl und der Abstand zwischen den ebenfalls in einer Reihe angeordneten Optik-Einrichtungen (10, 11, 12, 13) in Abhängigkeit von dem Zylinder-Stichmaß (9) vorgegeben ist.

3. Vorrichtung nach Anspruch 2, **dadurch gekennzeichnet, dass** die Anzahl der Optik-Einrichtungen (10, 11, 12, 13) der Anzahl der Zylinder (3, 4, 5, 6) entspricht.

4. Vorrichtung nach einem der vorhergehenden Ansprüche, **dadurch gekennzeichnet, dass** zur Belichtung der Zylinderlaufbahnen (2) eines mehrzylindrigen Zylinderblocks (7) ein im Strahlengang eines Laserstrahls (17) positioniertes, erstes Umlenkelement (22) in seiner Umlenkposition angeordnet ist dergestalt, dass der Laserstrahl (17) für eine vorgegebene Belichtungs-Zeitdauer zu einem dem ersten Umlenkelement (22) zugeordneten ersten Optiktubus (10) umlenkbar ist,
dass nach Ablauf der vorgegebenen Belichtungs-Zeitdauer das erste Umlenkelement (22) außerhalb des Strahlengangs des Laserstrahls (17) angeordnet ist dergestalt, dass der Laserstrahl (17) für eine vorgebbare Belichtungs-Zeitdauer auf ein im Strahlengang hinter dem ersten Umlenkelement (22) liegendes, zweites Umlenkelement (23) trifft, so dass der Laserstrahl (17) zu einem dem zweiten Umlenkelement (23) zugeordneten zweiten Optiktubus (11) umlenkbar ist, und
dass dieser Vorgang für jeden weiteren ggf. vorhandenen Optiktubus (12, 13) und entsprechend zugeordnetem Umlenkelement (24, 25) bzw. Zylinder (5, 6) durchführbar ist.

5. Vorrichtung nach Anspruch 4, **dadurch gekennzeichnet, dass** vom Ende der Belichtung einer Zylinderbohrung bis zum Beginn der Belichtung der nächstfolgenden Zylinderbohrung durch Wegklappen des Umlenkelementes eine Zeit von 100 Millisekunden bis mehrere Sekunden, vorzugsweise 10 Sekunden, insbesondere 150 bis 250 Millisekunden, vergeht.

6. Vorrichtung nach einem der Ansprüche 1 bis 5, **dadurch gekennzeichnet, dass** im Hohlträger (16) in Laserstrahlrichtung gesehen hinter einem letzten Umlenkelement (25) eine Energie-Messzelle (27) im Strahlengang des vorzugsweise gepulsten Laserstrahls (17) angeordnet ist.

7. Vorrichtung nach einem der Ansprüche 1 bis 6, **dadurch gekennzeichnet, dass** jedem Optiktubus (10, 11, 12, 13) ein mit einer Rechner- und Auswerteinrichtung gekoppelter Bildsensor (28, 29, 30, 31) zugeordnet ist, der im Inneren des Hohlträgers (16) angeordnet ist.

8. Vorrichtung nach einem der vorhergehenden Ansprüche, **dadurch gekennzeichnet, dass** pro Zylinderbank eines Zylinderblocks (7) eine Belichtungsvorrichtung (1) mit mehreren Optik-Einrichtungen (10, 11, 12, 13) und einer einzigen Lasereinrichtung vorgesehen ist.

9. Vorrichtung nach einem der vorhergehenden Ansprüche, **dadurch gekennzeichnet, dass** die wenigstens eine Belichtungsvorrichtung (1) Bestandteil einer Transferstraße ist, in der der zu belichtende Zylinderblock (7) der Belichtungsvorrichtung (1) von einer davor liegenden Station vorzugsweise getaktet zuführbar ist und in der der Zylinderblock (7) nach der Belichtung sämtlicher Zylinderlaufbahnen (2) der nächsten Station zuführbar ist.

10. Vorrichtung nach einem der vorhergehenden Ansprüche, **dadurch gekennzeichnet, dass** die Lasereinrichtung, vorzugsweise ein Kurzpuls-Laser, eine Energiedichte von größer 1 J/cm², vorzugsweise von 1,75 J/cm² bis 5 J/cm², aufweist.

11. Vorrichtung nach einem der vorhergehenden Ansprüche, **dadurch gekennzeichnet, dass** die Belichtungsvorrichtung (1) eine Einrichtung zur Erfassung eines Strahlprofils aufweist, die vorzugsweise aus einer CCD-Kamera (33), einem Umlenkelement (37) und/oder einem Quarzsubstrat (35) zur Auskoppelung des Laserstrahles (17) besteht.

12. Vorrichtung nach Anspruch 11, **dadurch gekennzeichnet, dass** das Strahlprofil über einen Bildschirm (32) visualisierbar ist.

13. Vorrichtung nach einem der vorhergehenden Ansprüche, **dadurch gekennzeichnet, dass** die Belichtungsvorrichtung (1) zur Ankoppelung an die retraktive Optik der Belichtungsanlage eine Schnellkupplung aufweist.

14. Vorrichtung nach einem der vorhergehenden Ansprüche, **dadurch gekennzeichnet, dass** der Einrichtung (33) zur Erfassung des Strahlenprofils ein Umwandlerschirm/Abschwächer (41) vorgeschaltet ist, der den Laserstrahl passend in die Wellenlänge der Einrichtung (33) umwandelt bzw. dessen Intensität abschwächt.

15. Vorrichtung nach einem der Ansprüche 11 bis 14, **dadurch gekennzeichnet, dass** in der Belichtungsvorrichtung (1) vor dem in Richtung des Strahlengangs ersten Umlenkelement (22) und vor der CCD-Kamera (33) jeweils eine Zieleinrichtung (38, 39) zur Justage des optischen Systems installiert ist, und das Bild der Markierungen der Zieleinrichtungen (38, 39) zur Visualisierung von der CCD-Kamera (33) erfassbar und auf dem Bildschirm (32) darstellbar ist.

16. Verfahren zur Belichtung von Zylinderlaufbahnen von Kolbenmaschinen unter Verwendung einer Vorrichtung nach einem der Ansprüche 1 bis 15.
